# EUROPEAN PATENT SPECIFICATION

(11) **EP 3 450 142 B1**
(45) Date of publication and mention of the grant of the patent: **16.06.2021**
(21) Application number: 17774038.8
(22) Date of filing: 01.03.2017
(51) Int. Cl.: B29C 64/124

(54) **PATTERNING METHOD AND PATTERNING DEVICE**
STRUKTURIERUNGSVERFAHREN UND STRUKTURIERUNGSVORRICHTUNG
PROCÉDÉ DE FORMATION DE MOTIF ET DISPOSITIF DE FORMATION DE MOTIF

(30) Priority: 31.03.2016 JP 2016073230
(43) Date of publication of application: 06.03.2019
(73) Proprietor: Nagase Chemtex Corporation, Osaka-shi Osaka 550-8668 (JP)
(72) Inventor: WATANABE Koji, Tatsuno-shi Hyogo 679-4124 (JP)
(74) Representative: Weal, Emily Teresa
(86) International application number: PCT/JP2017/008163
(87) International publication number: WO 2017/169493

(56) References cited:
- WO-A1-2015/164234
- JP-A- H04 223 138
- JP-A- H04 223 138
- JP-A- H08 156 107
- JP-A- H09 241 311
- JP-A- H11 221 829
- JP-A- S62 275 734
- US-A1- 2015 165 678

## Description

### [Technical Field]

The present invention relates to a patterning method and a pattering apparatus that are used in optical shaping.

### [Background Art]

In an application of an optical shaping technique such as 3D printers, conventionally, a platform (stage) for optical shaping is immersed, facing upward, in a photocurable material in a tray. In this case, a photocured pattern (a cured product of the photocurable material) is formed by irradiating light toward the platform from above, and by repeating the steps of lowering the platform and irradiating light, a three-dimensionally shaped article in which photocured patterns are laminated is formed. However, this method requires a large amount of photocurable material, and thus is disadvantageous in terms of cost.

From the viewpoint of solving the problem described above, suspension optical shaping is increasingly used in recent years. In the suspension optical shaping, a small amount of photocurable material is supplied to the tray capable of transmitting the light irradiated thereto, then, the platform is immersed in the photocurable material, and light is irradiated toward the platform from below the tray to form a photocured pattern. In this case, the platform is lifted each time a pattern is formed, and a three-dimensionally shaped article is formed by repeating the steps of lifting the platform and irradiating light.

In the suspension optical shaping, the photocured pattern formed between the inner bottom surface of the tray and the platform is detached from the inner bottom surface of the tray, and lifted together with the platform. Accordingly, a release layer in the form of a film is formed on the inner bottom surface of the tray, the release layer being made of FEP (tetrafluoroethylene-hexafluoropropylene copolymer), PTFE (polytetrafluoroethylene), PFA (tetrafluoroethylene-perfluoro (alkyl vinyl ether) copolymer), or the like (see, for example, Patent Literature 1).

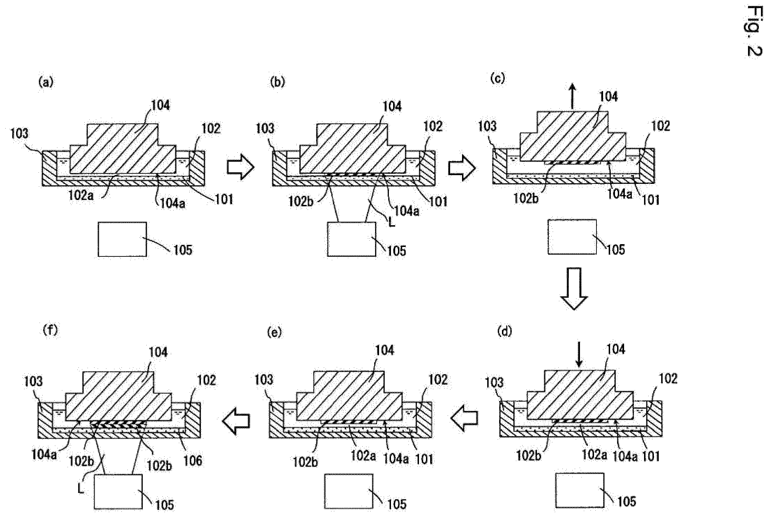

FIG. 2 is a schematic cross-sectional view illustrating the steps of an ordinary patterning method for suspension-type three-dimensional optical shaping. As shown in FIG. 2, in the suspension optical shaping, first, a liquid film 102a made of photocurable material (patterning material) 102 is formed between a pattern forming surface 104a of a platform 104 and a release layer 101 placed on the inner bottom surface of a tray 103 (step (a)). Light L is irradiated toward the pattern forming surface 104a by a light source 105 from the bottom portion of the tray 103 to cure the liquid film 102a, and a pattern 102b is thereby formed (step (b)). Next, the platform 104 is lifted, and the pattern 102b is detached from the release layer 101 (step (c)). However, the pattern 102b has been cured while in contact with the release layer 101, and thus is not easily detached. For this reason, the platform 104 is lifted with a somewhat large force to facilitate the detachment of the pattern 102b from the release layer 101. When the platform 104 is vigorously lifted, in order to form the liquid film 102a having an appropriate thickness between the pattern 102b and the release layer 101, it is necessary to again lower the platform 104 (step (d)). Also, due to the platform 104 being lifted in the step (c) and lowered in the step (d), the patterning material between the platform 104 and the release layer 101 moves, and a turbulent flow is generated. For this reason, after an additional liquid film 102a is formed, and the patterning material is allowed to stand until the turbulent flow of the patterning material becomes stationary to a certain degree (step (e)), it is necessary to again irradiate light L to the liquid film 102a from the light source 105 to cure the liquid film 102a, and form an additional pattern 102b (step (f)).

Also, another method for optical shaping has been proposed that uses a tray including a bottom portion capable of transmitting the light irradiated thereto and oxygen. According to this method, patterning is continuously performed by forming a thin layer (dead zone) of uncured resin where the curing reaction is inhibited in a vicinity of the inner bottom surface of the tray due to oxygen flowing into the tray from the bottom portion (Non Patent Literature 1).

### [Citation List]

### [Patent Literature]

[PTL 1] Laid-Open Patent Publication No. 2008-137392; and

International Patent Number WO 2015/164234 A in the name of CARBON3D, INC concerns, as per the second paragraph of the first page thereof, *"methods and apparatus for the fabrication of solid three-dimensional objects in a bottom-up fashion from an immiscible liquid layer or pool".*

### [Non Patent Literature]

[NPL 1] Science, vol. 347, pp. 1349 - 1352

### [Summary of Invention]

### [Technical Problem]

The conventional suspension optical shaping requires the steps of lifting and lowering the platform to detach the pattern from the release layer, and also requires time for the patterning material to stand until the turbulent flow of the liquid film becomes stationary. For this reason, the process is complex, and it takes a long time to perform optical shaping.

Even when the tray including an oxygen permeable bottom portion is used, it requires a certain degree of momentum and force in order to detach the pattern from the tray. Furthermore, in a region close to the dead zone of the formed pattern, the material is likely to be insufficiently cured, and thus it takes a long time to cure the pattern.

It is an object of the present invention to provide a patterning method and a patterning apparatus with which, in optical shaping, it is possible to form a photocured pattern easily and in a short time, without the need to detach the photocured pattern (cured product) from a release layer.

### [Solution to Problem]

An aspect of the present invention relates to a patterning method for forming a pattern by irradiating light toward a photocurable patterning material, the method comprising the steps of:
(i) supplying a release material in a liquid state having a first specific gravity d1 and the patterning material in a liquid state that has a second specific gravity d2 smaller than the first specific gravity d1 and phase-separates from the release material to a patterning tray including a bottom portion having a light-exposed surface to form a first liquid layer of the release material in contact with the bottom portion and also form, on the first liquid layer, a second liquid layer of the patterning material in contact with the first liquid layer, and thereby forming a liquid film made of the patterning material in a vicinity of an interface of the second liquid layer with the first liquid layer; and
(ii) irradiating light to the liquid film via the first liquid layer to photocure the liquid film and form a pattern,
characterised in that the first specific gravity d1 is 1.2 or more,
a difference between the first specific gravity d1 and the second specific gravity d2 is 0.1 or more, and
the release material when forming the pattern in the step (ii) has a viscosity of 10 kg.m⁻¹.s⁻¹ or less,
wherein the value of the viscosity is determined as specified in the description.

Another aspect of the present invention relates to a patterning method for forming a pattern by irradiating light toward a photocurable patterning material, the method comprising the steps of:
(i) supplying a release material in a liquid state having a first specific gravity d1 and the patterning material in a liquid state that has a second specific gravity d2 smaller than the first specific gravity d1 and phase-separates from the release material to a patterning tray including a bottom portion having a light-exposed surface to form a first liquid layer of the release material in contact with the bottom portion and also form, on the first liquid layer, a second liquid layer of the patterning material in contact with the first liquid layer, and thereby forming a liquid film made of the patterning material in a vicinity of an interface of the second liquid layer with the first liquid layer; and
(ii) irradiating light to the liquid film via the first liquid layer to photocure the liquid film and form a pattern,
characterised in that a difference between a surface tension of the patterning material and a surface tension of the release material is 10 mN/m or more, and
the release material when forming the pattern in the step (ii) has a viscosity of 10 kg.m⁻¹.s⁻¹ or less,
wherein the value of the viscosity is determined as specified in the description.

Another aspect of the present invention relates to a patterning apparatus for forming a pattern by irradiating light toward a photocurable patterning material, the apparatus comprising:
a patterning tray that includes a bottom portion having a light-exposed surface, and in which a release material in a liquid state having a first specific gravity d1 and the patterning material in a liquid state that has a second specific gravity d2 smaller than the first specific gravity d1 and phase-separates from the release material are supplied to form a first liquid layer of the release material in contact with the bottom portion and also form, on the first liquid layer, a second liquid layer of the patterning material in contact with the first liquid layer so that a liquid film made of the patterning material is formed in a vicinity of an interface of the second liquid layer with the first liquid layer; and
a light source for emitting light to the liquid film via the first liquid layer to photocure the liquid film and form a pattern,
characterised in that the first specific gravity d1 is 1.2 or more,
a difference between the first specific gravity d1 and the second specific gravity d2 is 0.1 or more, and
the release material when forming the pattern in the step (ii) has a viscosity of 10 kg.m⁻¹.s⁻¹ or less,
wherein the value of the viscosity is determined as specified in the description.

Another aspect of the present invention relates to a patterning apparatus for forming a pattern by irradiating light toward a photocurable patterning material, the apparatus comprising:
a patterning tray that includes a bottom portion having a light-exposed surface, and in which a release material in a liquid state having a first specific gravity d1 and the patterning material in a liquid state that has a second specific gravity d2 smaller than the first specific gravity d1 and phase-separates from the release material are supplied to form a first liquid layer of the release material in contact with the bottom portion and also form, on the first liquid layer, a second liquid layer of the patterning material in contact with the first liquid layer so that a liquid film made of the patterning material is formed in a vicinity of an interface of the second liquid layer with the first liquid layer; and
a light source for emitting light to the liquid film via the first liquid layer to photocure the liquid film and form a pattern,
characterised in that a difference between a surface tension of the patterning material and a surface tension of the release material is 10 mN/m or more, and
the release material when forming the pattern in the step (ii) has a viscosity of 10 kg.m⁻¹.s⁻¹ or less,
wherein the value of the viscosity is determined as specified in the description.

### [Advantageous Effects of Invention]

According to the present invention, in optical shaping, it is possible to form a photocured pattern easily and in a short time, without the need to detach the photocured pattern (cured product) from a release layer placed on the inner bottom surface of a patterning tray.

A novel feature of the present invention is set forth in the appended claims, but the present invention will be more clearly understood, in terms of both configuration and content, from the detailed description given below with reference to the accompanying drawings together with other objects and features of the present invention.

### [Brief Description of Drawings]

[FIG. 1] FIG. 1 is a schematic cross-sectional view illustrating the steps of a patterning method according to an embodiment of the present invention.
[FIG. 2] FIG. 2 is a schematic cross-sectional view illustrating the steps of an ordinary patterning method for suspension optical shaping.

### [Description of Embodiment]

### [Patterning Method and Patterning Apparatus]

Hereinafter, the patterning method and the patterning apparatus according to the present invention will be described in further detail with reference to the accompanying drawings where appropriate.

A patterning method according to an embodiment of the present invention is a pattern production method for forming a desired pattern (a two-dimensional pattern, a three-dimensional pattern (or a three-dimensionally shaped article) or the like) by irradiating light toward a photocurable patterning material. The patterning method includes the steps of: (i) supplying a release material in a liquid state having a first specific gravity d1 and a patterning material in a liquid state that has a second specific gravity d2 smaller than the first specific gravity d1 and phase-separates from the release material to a patterning tray including a bottom portion having a light-exposed surface to form a first liquid layer of the release material in contact with the bottom portion and also form, on the first liquid layer, a second liquid layer of the patterning material in contact with the first liquid layer, and thereby forming a liquid film made of the patterning material in a vicinity of an interface of the second liquid layer with the first liquid layer; and (ii) irradiating light to the liquid film via the first liquid layer to photocure the liquid film and form a pattern. In the step (i), the liquid film may be formed between a pattern forming surface of a platform and the first liquid layer by immersing the pattern forming surface in the second liquid layer.

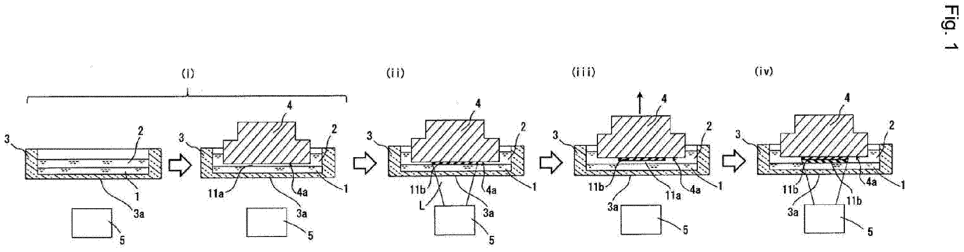

FIG. 1 is a schematic cross-sectional view illustrating the steps of the patterning method according to the embodiment of the present invention. As shown in FIG. 1, first, in the step (i), a release material in a liquid state and a patterning material in a liquid state are supplied to a patterning tray 3 to form a first liquid layer 1 of the release material in contact with the bottom portion (specifically, inner bottom surface) of the patterning tray 3 and a second liquid layer 2 of the patterning material in contact with the first liquid layer 1 on the first liquid layer 1. By selecting the release material and the patterning material such that the release material has a specific gravity (first specific gravity) d1 greater than a specific gravity (second specific gravity) d2 of the patterning material, and by using materials that phase-separate from each other as the release material and the patterning material, a first liquid layer 1 of the release material is formed between the bottom portion of the patterning tray 3 and the second liquid layer 2.

In the step (i), a liquid film 11a of the patterning material is formed in a vicinity of the interface of the second liquid layer 2, which is the upper layer, with the first liquid layer 1, which is the lower layer. In the example shown in the diagram, the liquid film 11a is formed between the first liquid layer 1 and a pattern forming surface 4a that corresponds to a bottom surface of a platform 4 by immersing the pattern forming surface 4a in the second liquid layer 2. In the case where the platform 4 is not used, by forming the first liquid layer 1 and the second liquid layer 2 on the first liquid layer 1, the liquid film 11a is formed in the second liquid layer 2 at a position in a vicinity of the interface between the first liquid layer 1 and the second liquid layer 2.

The bottom portion (specifically, outer bottom surface) of the patterning tray 3 includes a light-exposed surface 3a disposed to oppose a light source 5 disposed below the patterning tray 3. In the step (ii), light L is irradiated to the liquid film 11a from the light source 5 via the first liquid layer 1. The irradiated light L passes through the bottom portion of the patterning tray 3 and the first liquid layer 1 above the light-exposed surface 3a, and is absorbed by the liquid film 11a. As a result, the liquid film 11a is photocured, and a two-dimensional pattern 11b is formed.

Furthermore, a three-dimensional pattern may be formed by laminating two-dimensional patterns. To be more specific, after the step (ii), the pattern forming surface 4a is lifted to further form a liquid film 11a of the patterning material between the pattern 11b and the first liquid layer 1 (step (iii)). Then, light L is irradiated to the liquid film 11a from the light source 5 via the first liquid layer 1 (and the bottom portion of the patterning tray 3) to cure the liquid film 11a and form an additional pattern 11b. As a result, the additional pattern 11b is laminated on the two-dimensional pattern 11b (step (iv)), and a three-dimensional pattern can be formed. Furthermore, a three-dimensional pattern having various thicknesses may be formed by repeating the step (iii) and the step (iv) a plurality of times.

The pattern 11b obtained in the step (ii) is formed on the first liquid layer 1 of the release material, and is in a separated state from the first liquid layer 1 while in contact with the first liquid layer 1. Accordingly, unlike conventional technology, it is unnecessary to detach the formed pattern 11 b from the inner bottom surface of the patterning tray 3 or the release layer. Thus, in the case where a three-dimensional pattern is formed by using the platform 4, it is unnecessary to lift the platform 4 excessively to detach the pattern 11b, and thus it is also unnecessary to lower the pattern forming surface 4a of the platform 4 to a position at which a subsequent liquid film 11a having an appropriate thickness is formed next between the formed pattern 11b and the first liquid layer 1. In addition, it is also unnecessary to vigorously lift the platform 4, and thus the pattern material present between the formed pattern 11b and the first liquid layer 1 is prevented from moving significantly. Accordingly, it is possible to form a subsequent pattern 11b by promptly performing light irradiation immediately after the liquid film 11a has been formed. The same applies to the case where patterns are laminated. That is, it is unnecessary to detach the pattern 11b from the patterning tray 3 or the release layer, and it is also unnecessary to lower the pattern forming surface 4a. Accordingly, prompt light irradiation is possible. As described above, according to the present embodiment, it is possible to form a photocured pattern easily and in a short time. In the present embodiment, the liquid film 11a and the pattern 11b can be formed continuously and smoothly, and it is therefore possible to form a three-dimensional pattern in a continuous manner, and also perform optical shaping at a high speed.

Also, in ordinary suspension optical shaping, formation of a photocured pattern and detachment of the photocured pattern from the release layer are repeated, and thus a detachment stress is applied to the release layer each time a photocured pattern is detached, and the release layer may deteriorate (may be whitened or the like). When the release layer deteriorates (is whitened or the like), the releasability may decrease, which make it difficult to detach the photocured pattern, and also an even greater detachment stress is applied to the release layer. Also, the pattern may be detached at, instead of the interface between the release layer and the pattern, an interface (for example, the interface between the patterning tray and the release layer) other than the interface between the release layer and the pattern, and it may not be possible to reproduce a fine shape. Also, the patterning material may generate heat when it is cured, and cause damage to the release layer. However, in the present embodiment, although the pattern 11b is formed on the first liquid layer 1 that corresponds to the release layer, the pattern 11b is kept unadhering to the first liquid layer 1, and thus a detachment stress is not applied to the first liquid layer 1. Accordingly, whitening of the first liquid layer 1, the reduction of the releasability, and deterioration of the first liquid layer 1 are suppressed, and the reproducibility of fine shape is also high. It is also possible to suppress the detachment of the pattern or the release layer at an unintended interface.

The patterning apparatus according to an embodiment of the present invention is an apparatus that forms a pattern by irradiating light toward a photocurable patterning material. The patterning apparatus includes a patterning tray to which a release material and a patterning material are supplied to form a first liquid layer and a second liquid layer, and a light source used to photocure a liquid film of the patterning material formed in a vicinity of an interface of the second liquid layer with the first liquid layer. The patterning apparatus may further include a platform having a pattern forming surface.

The patterning tray includes a bottom portion having a light-exposed surface, and a first liquid layer of the release material is formed to be in contact with the bottom portion, and a second liquid layer of the patterning material is formed on the first liquid layer to be in contact with the first liquid layer. The platform is movable in up and down directions to immerse the pattern forming surface in the second liquid layer and form a liquid film made of the patterning material between the pattern forming surface and the first liquid layer. Such a platform-equipped apparatus is suitable to form a three-dimensional pattern. The light source emits light to the liquid film via the first liquid layer to photocure the liquid film and form a pattern.

In the present invention, in order not to inhibit photocuring of the liquid film, the patterning tray and the first liquid layer are required to, at least a light-exposed region, transmit the irradiated light (for example, light in a range from ultraviolet light to visible light). It is preferable that, in the patterning tray and the first liquid layer, at least the light-exposed region has a high light transmittance of, for example, 80% or more, or 90% or more to the irradiated light.

Hereinafter, the steps of the patterning method and the constituent units of the patterning apparatus will be described in further detail.

### (Step (i))

In the step (i), a first liquid layer 1 and a second liquid layer 2 are formed in the patterning tray 3. By using, as the release material, a material having a first specific gravity d1 greater than the second specific gravity d2 of the patterning material, the first liquid layer 1 can be disposed between the second liquid layer 2 and the inner bottom surface of the patterning tray 3. The first liquid layer 1 has releasability for a cured pattern, and thus can function as the release layer in a liquid state when a cured pattern formed on the first liquid layer 1 is removed from the second liquid layer 2 or is lifted together with the pattern forming surface 4a of the platform 4.

The first specific gravity d1 of the release material is, for example, 1.1 or more, preferably 1.2 or more, or 1.4 or more, and more preferably 1.5 or more, or 1.7 or more. Also, the difference (= d1 - d2) between the first specific gravity d1 and the second specific gravity d2 may be greater than 0, preferably 0.1 or more, and more preferably 0.2 or more, or 0.3 or more. When the first specific gravity d1 or the difference in specific gravity is within the above range, the first liquid layer 1 can be easily formed as a lower layer, which is formed under the second liquid layer 2.

From the viewpoint of smoothly removing the cured pattern and smoothly lifting the cured pattern together with the platform while ensuring a high level of reproducibility of the cured pattern, it is also important that the release material in a liquid state and the patterning material in a liquid state are less compatible as possible. By using materials that phase-separate from each other as the release material and the patterning material, a distinct interface is formed between the first liquid layer 1 and the second liquid layer 2. Because the liquid film is formed on the first liquid layer 1 (or in other words, on the interface described above), as a result of a distinct interface being formed, the surface of the cured pattern in contact with the first liquid layer 1 can be smoothened.

From the viewpoint of ensuring a high level of incompatibility between the release material in a liquid state and the patterning material in a liquid state, the difference (absolute value) between the surface tension of the patterning material and the surface tension of the release material is, for example, 0.3 mN/m or more, and preferably 10 mN/m or more, and may be 15 mN/m or more, or 20 mN/m or more.

In the step (i), it is sufficient that it is possible to form a first liquid layer 1 and a second liquid layer 2, and form a liquid film made of the patterning material. Either the release material or the patterning material may be supplied first to the patterning tray 3. Alternatively, the release material and the patterning material may be supplied together. Because the first liquid layer 1 is formed as the lower layer, the release material may be supplied first to the patterning tray 3 to form a first liquid layer 1, and thereafter the patterning material may be gently supplied to the patterning tray 3 to form a second liquid layer 2.

### (Patterning Tray 3)

The shape of the patterning tray 3 is not particularly limited as long as it is possible to contain the release material and the patterning material, and the first liquid layer 1 and the second liquid layer 2 can be formed. The patterning tray 3 includes, for example, a bottom portion having a square shape, a circular shape or the like, and a side wall extending in the height direction from the perimeter of the bottom portion. The patterning tray 3 has a shape of, for example a plate, a vat or the like.

In order not to interrupt the light irradiated to the liquid film made of the patterning material, the light-exposed surface of the bottom portion of the patterning tray 3 and the surrounding region (preferably a region located below the pattern forming surface 4a of the platform 4) are configured to be capable of transmitting the light irradiated thereto. The perimeter portion of the bottom portion and the side wall of the patterning tray 3 are not necessarily configured to be capable of transmitting the light irradiated thereto, but the entire patterning tray may be configured to be capable of transmitting the light irradiated thereto (for example, transparent).

The patterning tray 3 is made from an organic material such as resin, or an inorganic material such as glass. The light-exposed region of the patterning tray 3 is made of resin (first resin) or glass. The first resin constituting the patterning tray 3 may be a resin capable of transmitting the light irradiated thereto, and examples include polycarbonate resin, acrylic resin, and the like. The patterning tray 3 may contain one or two or more of these materials. Where necessary, the patterning tray 3 may contain known additives.

In the case where the patterning tray 3 has a low wettability for the release material, it is difficult to form a thin first liquid layer 1 (the thickness of the first liquid layer 1 tends to be large). In this case, a coating film made of a material having a high wettability for the release material may be disposed in at least a portion between the patterning tray 3 and the first liquid layer 1. For example, in the case where a highly oil repellent material such as a liquid material having a perfluorocarbon structure is used as the release material, a coating material containing, for example, a surface modifying agent may be formed in at least a portion between the patterning tray 3 and the first liquid layer 1. Examples of the surface modifying agent include a silicon-containing surface modifying agent, an acrylic surface modifying agent, a fluorine-containing surface modifying agent, and the like.

The coating film may be formed in at least a portion between the patterning tray 3 and the first liquid layer 1, may be formed, for example, on the entire inner bottom surface of the patterning tray 3, or may be formed on the entire inner bottom surface of the patterning tray 3 and at least a lower region of the inner surface of the side wall.

The thickness of the coating film is determined as appropriate within a range in which the transmittance of the irradiated light can be ensured, and is, for example, 1 µm to 10 mm.

Where necessary, the patterning tray 3 and/or the patterning apparatus may further include a cartridge(s), each of which supplys the release material and/or the patterning material to the patterning tray 3, and the like.

### (First Liquid Layer 1)

The release material used in the first liquid layer 1 has flowability, and is normally in a liquid state at room temperature (for example, 20 to 30°C).

The release material is not particularly limited as long as it is a liquid material that has a first specific gravity d1 greater than the second specific gravity d2 of the patterning material, phase-separates from the patterning material, and transmits the light irradiated thereto so as not to inhibit photocuring of the liquid film. Such a release material may be selected as appropriate according to the type of patterning material. It is sufficient that the release material can phase-separate from at least the patterning material, and preferably a distinct interface is formed between the two layers. It is more preferable that the release material is not compatible with the patterning material, or in other words, the release material again phase-separates from the patterning material even when, for example, the release material and the patterning material are agitated.

As the release material, for example, a liquid that is inert to the patterning material and the light irradiated thereto, and may be either a molecular liquid or a solution containing a salt. The molecular liquid is preferably a fluorine-containing liquid from the viewpoint of having a high specific gravity and being inert. An example thereof may be a liquid material having a perfluorocarbon structure. The solution containing a salt may be an organic solution containing a salt and an organic solvent, and preferably is an aqueous solution containing a salt and water. The salt is not particularly limited. From the viewpoint of cost, versatility, safety and the like, it is preferable to use salt water.

The liquid material having a perfluorocarbon structure may be, for example, a liquid material having at least a perfluoroalkyl group, and may be perfluorocarbon, or a liquid material further having an ether structure or a polyether structure. The liquid material may be in a liquid state at least when photocuring is performed in the step (ii), and is preferably in a liquid state at room temperature (for example, 20 to 30°C). Specific examples of the liquid material include Fluorinert® series and Novec® series available from 3M Corporation, Demnum series available from Daikin Industries, Ltd., and the like. More specific examples include: Novec® 7000 (C3F7OCH3), 7100 (C4F9OCH3), 7200 (C4F9OC2H5) and 7300 (C2F5CF(OCH3)C3F7); Fluorinert® FC-72, FC-770, FC-3283, FC-40 and FC-43; Demnum S-20, S-65 and S-200; and the like. These materials may be used alone or in a combination of two or more. From the viewpoint of ease of ensuring safety, the liquid material preferably has a high boiling point, and more preferably a boiling point of over 100°C. Examples of the liquid material having such a high boiling point include Fluorinert® FC-3283, FC-40, FC-43, and the like.

The release material has a viscosity of preferably 10 kg.m⁻¹ .s⁻¹ or less, and preferably 1 m kg.m⁻¹ .s⁻¹ to 1 kg.m⁻¹.s⁻¹. When the release material has a viscosity within such a range, it is easy to form the first liquid layer 1, and keep the liquid surface level. The viscosity of the release material can be measured by using, for example, an E-type viscometer at a predetermined rotation speed (10 rpm). The release material may have a viscosity within the above range at least when a pattern is formed in the step (ii), and may have a viscosity within the above range at room temperature (for example, 20 to 30°C). The viscosity can be measured at a temperature at which a pattern is formed or at room temperature (for example, 25°C).

The first liquid layer 1 may have such a thickness that at least a region opposite to the light-exposed surface 3a is wet with the release material on the inner bottom surface of the patterning tray 3. The thickness of the first liquid layer 1 is, for example, 1 µm to 10 mm, preferably 10 µm to 5 mm, and may be 1 to 10 mm, or 2 to 10 mm.

### (Second Liquid Layer 2)

The patterning material used in the second liquid layer 2 is a photocurable material and contains a photocurable monomer, a photocurable precursor (a photocurable oligomer, a photocurable prepolymer or the like), and may further contain a photopolymerization initiator. Also, it is possible to use, as the patterning material, a silane compound (alkoxysilane or the like) for forming polysiloxane by an optical sol-gel reaction. The patterning material preferably has flowability and is normally in a liquid state at room temperature (for example, 20 to 30°C).

According to the present invention, it is unnecessary to lift or lower the platform 4 in a wide range. For this reason, a pattern can be formed even when a material deformable by such Z axis movement, or a material deformable by suspension is used. Accordingly, the degree of freedom of selecting a patterning material can be improved.

As the photocurable monomer, a monomer that can be cured or polymerized by the action of radicals, cations, anions or the like generated by light irradiation is used. As the radically polymerizable photocurable monomer, it is preferable to use a polyfunctional monomer having a plurality of polymerizable functional groups. The number of polymerizable functional groups in the photocurable monomer is, for example, 2 to 8. Examples of the polymerizable functional groups include polymerizable carbon-carbon unsaturated bond-containing groups such as vinyl group and allyl group, epoxy group, and the like.

To be more specific, as the photocurable monomer, for example, it is possible to use a radically polymerizable monomer such as an acrylic monomer, a cationically polymerizable monomer such as an epoxy-series monomer, a vinyl-series monomer, or a diene-series monomer. The photocurable monomer may be composed of a single photocurable monomer or a combination of two or more photocurable monomers.

As the acrylic monomer, for example, a (meth)acrylic acid ester of a polyol is used. The polyol may be, for example, an aliphatic polyol, and may have an aromatic ring or an aliphatic ring. In this specification, acrylic acid esters and methacrylic acid esters are collectively referred to as (meth)acrylic acid esters and (meth)acrylates.

Examples of the vinyl-series monomer include a vinyl ether such as polyol poly(vinylether), an aromatic vinyl monomer such as styrene, vinyl alkoxysilane, and the like. As the polyol constituting the polyol poly(vinylether), any of the polyols listed for the acrylic monomer can be used.

Examples of the diene-series monomer include isoprene, butadiene, and the like.

As the epoxy-series monomer, it is possible to use a compound having two or more epoxy groups within a molecule. The epoxy-series monomer may have, for example, an epoxycyclohexane ring or a 2,3-epoxypropyloxy group.

Examples of the photocurable precursor include oligomers of the above-listed photopolymerizable monomers, a urethane acrylate-series oligomer, a diallyl phthalate prepolymer, and the like. These can be further polymerized through photopolymerization. The diallyl phthalate prepolymer is an oligomer or a polymer in which a plurality of diallyl phthalate units are connected. The diallyl phthalate prepolymer may contain one kind of diallyl phthalate unit, or may contain two or more kinds of diallyl phthalate units. The two or more diallyl phthalate units may be, for example, a plurality of diallyl phthalate units in which allyloxycarbonyl groups are located at different positions. It is also possible to use an ortho-diallyl phthalate prepolymer including a linking chain of o-diallyl phthalate units, an iso-diallyl phthalate prepolymer including a linking chain of m-diallyl phthalate units, or the like.

The weight-average molecular weight of the photocurable precursor is, for example, 5,000 to 150,000, and may be 10,000 to 150,000 or 30,000 to 150,000.

The patterning material may further contain a thiol compound. In this case, an ene-thiol reaction occurs between the mercapto group of the thiol compound and the carbon-carbon double bond of the diallyl phthalate prepolymer and/or the photocurable monomer, and the curing speed can be further enhanced. The thiol compound may be a monofunctional compound having one mercapto group, but is preferably a polyfunctional compound having two or more mercapto groups from the viewpoint of ease of enhancing the curing speed.

The photopolymerization initiator is activated by the action of light, and starts polymerization of the photocurable monomer and/or the precursor. Examples of the photopolymerization initiator include a radical polymerization initiator that generates radicals by the action of light, and a polymerization initiator that generates acid (or cations) by the action of light (specifically, a cation generator). The photopolymerization initiators may be used alone or a combination of two or more. The photopolymerization initiator may be selected according to the type of photocurable monomer, for example, according to whether it is radically polymerizable or cationically polymerizable. As the radical polymerization initiator (radical photopolymerization initiator), for example, an alkylphenone-series photopolymerization initiator, an acylphosphine oxide-series photopolymerization initiator or the like can be used.

The patterning material may further contain any other known curable resin, and the like.

Also, the patterning material may contain a known additive.

The patterning apparatus may include a platform 4 for forming a three-dimensionally shaped article. In this case, in the step (i), the pattern forming surface 4a of the platform 4 is immersed in the second liquid layer 2 to form a liquid film 11a between the pattern forming surface 4a and the first liquid layer 1. The shape, material, size and the like of the platform 4 are not particularly limited as long as the platform 4 includes the pattern forming surface 4a.

In the case where the platform 4 is used, the thickness of the liquid film 11a is not particularly limited as long as the liquid film 11a can be cured by light irradiation and a two-dimensional pattern 11b can be formed in the next step. The thickness of the liquid film 11a is, for example, 5 to 300 µm, and preferably 15 to 150 µm from the viewpoint of facilitating the curing reaction to proceed.

### (Step (ii))

In the step (ii), light is irradiated to the liquid film 11a formed in the step (i) to cure the liquid film 11a and form a two-dimensional pattern 11b. The light irradiation can be performed by a known method. As the light source 5, a known light source used for photocuring can be used. The exposure method for forming the pattern is not particularly limited, and it is possible to use a point exposure method or a plane exposure method. In the point exposure method, light exposure can be performed by using, for example, a galvano laser. As the projector for plane exposure, it is possible to use an LCD (transmissive liquid crystal) projector, an LCoS (reflective liquid crystal) projector, a DLP® (digital light processing) projector, or the like.

The wavelength of the irradiated light can be selected as appropriate according to the constituent components of the patterning material (in particular, the type of photopolymerization initiator). For light irradiation, ultraviolet light, visible light or the like is preferably used. In the case where the radically polymerization initiator is used, light having a wavelength of, for example, 300 to 450 nm is used for light irradiation.

The formed pattern is a cured product of the patterning material. Among the materials constituting the pattern obtained through curing, a rubbery polymer is flexible. In the case where a three-dimensional pattern is formed by conventional suspension optical shaping, it is required that the pattern is detached from the release layer, and the platform 4 is lifted and lowered in a wide range. Accordingly, the cured product suspended on the pattern forming surface is likely to deform, and it has been difficult to form a three-dimensional pattern by using a flexible material such as a rubbery polymer. According to the present invention, the upward movement and downward movement of the platform 4 are reduced as compared with the conventional suspension optical shaping, and thus the present invention is also suitable for forming a pattern by using a flexible material such as a rubbery polymer. As the rubbery polymer, it is possible to use, for example, an acrylic rubber, a diene-series rubber, a styrene-butadiene-based rubber, a silicone rubber, an elastomer, or the like.

### (Step (iii))

A three-dimensional pattern can be formed by sequentially laminating a two-dimensional pattern on the pattern forming surface 4a of the platform 4.

In the step (iii), the pattern forming surface 4a is lifted to further form a liquid film 11a of the patterning material between the pattern 11b and the first liquid layer 1. That is, a subsequent liquid film 11a is formed on the pattern 11b that has been formed on the pattern forming surface 4a. The liquid film 11a is formed between the first liquid layer 1 and the pattern 11b that has been formed on the pattern forming surface 4a as a result of the pattern forming surface 4a of the platform 4 being immersed in the second liquid layer 2.

The thickness of the liquid film 11a formed in the step (iii) can be set as appropriate within the range discussed above for the liquid film 11a formed in the step (i).

Where necessary, the patterning apparatus may further include a unit for lifting the platform 4 (or lowering the platform 4 as needed) so that the liquid film 11a of the patterning material is formed between the light source 5 and the pattern forming surface 4a.

### (Step (iv))

In the step (iv), light is irradiated to the liquid film 11a formed in the step (iii) from the light source 5 via the first liquid layer 1 to photocure the liquid film 11a and laminate, on the two-dimensional pattern 11b, an additional pattern 11b. In this way, by laminating a two-dimensional pattern in the thickness direction, a three-dimensionally shaped pattern can be formed.

Regarding details of the light source, the wavelength of the irradiated light, and the like, reference can be made to the corresponding description in the step (ii).

### (v) Step of repeating step (iii) and step (iv)

The patterning method may include a step (v) of repeating the step (iii) and the step (iv) a plurality of times. Through the step (v), a plurality of two-dimensional patterns 11b are laminated in the thickness direction, and it is therefore possible to obtain a shaped pattern that is more three-dimensional. In the step (iii) performed the second and subsequent times, the liquid film 11a is formed between the first liquid layer 1 and the pattern 11b.

The number of repetitions can be determined as appropriate according to the shape, size and the like of the desired three-dimensionally optical shaped pattern.

### (Others)

Normally, the two-dimensional pattern 11b obtained in the step (ii) or the three-dimensional patterns obtained in the step (iv) or the step (v) is subjected to a cleaning treatment using a solvent because uncured patterning material is attached to the patterns.

Where necessary, the pattern obtained in the step (ii), the step (iv) or the step (v) may be subjected to a post-curing treatment. The post-curing treatment can be performed by irradiating light toward the pattern. The conditions for light irradiation can be adjusted as appropriate according to the type of patterning material, the degree to which the obtained pattern is cured, or the like. The post-curing treatment may be performed on a portion of the pattern or on the entire pattern.

### [Examples]

Hereinafter, the present invention will be described specifically by way of examples and comparative examples, but the present invention is not limited to the examples given below.

### Example 1

### (1) Preparation of patterning material

A uniform photocurable patterning material (material a1) in a liquid state was prepared by adding 3 parts by mass of acylphosphine oxide-series photopolymerization initiator (Irgacure 819 available from BASF) to 100 parts by mass of tricyclodecane dimethanol diacrylate and heating the resultant at 80°C. The viscosity, specific gravity and surface tension of the patterning material were measured in the air under the condition that the liquid temperature was set to room temperature (25°C). The surface tension was measured by Young-Laplace method using an auto contact angle meter DM-501 available from Kyowa Interface Science Co., Ltd.

### (2) Evaluation

### (2-1) Evaluation A

### (a) Formation of first liquid layer and second liquid layer

A release material in a liquid state having a perfluorocarbon structure (material b1, Fluorinert® FC-43 available from 3M Corporation) was poured into a glass petri dish (with a diameter of 5 cm) that was used as the patterning tray, and a first liquid layer (with a thickness of 5 mm) of the release material was formed. In the same manner as with the patterning material, the viscosity, specific gravity and surface tension of the release material were measured in the air under the condition that the liquid temperature was set to room temperature (25°C).

Next, the patterning material prepared above was gently poured into the glass petri dish, and the state of phase separation between the first liquid layer and a second liquid layer of the patterning material was visually checked based on the following criteria.

Criterion A: The second liquid layer is formed on the first liquid layer. The first liquid layer and the second liquid layer are phase-separated into two layers, and a distinct interface is observed between the two layers.

Criterion B: A layer made of the release material is formed as the lower layer and a layer made of the patterning material is formed as the upper layer, but a distinct interface is not observed between the two layers.

Criterion C: The release material and the patterning material are phase-separated into two layers, but a layer made of the patterning material is formed as the lower layer (first liquid layer) and a layer made of the release material is formed as the upper layer (second liquid layer).

Criterion D: The release material and the patterning material are mixed with each other in a compatible manner, or formed into an emulsion.

### (b) Formation of pattern

Light having a wavelength of 405 nm was irradiated to the liquid film formed in a vicinity of the interface of the second liquid layer with the first liquid layer at a light intensity of 5 mW/cm2 for 10 seconds by using an LED lamp via the bottom portion of the glass petri dish and the first liquid layer to cure the patterning material. The state of the obtained cured film (two-dimensional pattern) of the patterning material and the condition in removing the cured film were evaluated based on the following criteria.
Criterion A: A thin cured film was formed. The cured film was easily removed from the vicinity of the interface between the first liquid layer and the second liquid layer by using a pair of tweezers, and lifted from the first liquid layer without resistance.
Criterion B: The cured film was easily removed with a pair of tweezers, and lifted from the first liquid layer without resistance. However, the cured film had a deformed and indefinite shape.
Criterion C: A thin cured film was formed. However, the cured film was firmly attached to the inner bottom surface of the glass petri dish, and it was not possible to detach the cured film while maintaining the shape of the cured film.
Criterion D: A cured film was not formed, or only fine cured particles were dispersed in the liquid and were not removed as a cured film.

Next, three-dimensional optical shaping was performed by using a patterning apparatus (XJ-M151 available from Casio, Co., Ltd.) using a DLP® (digital light processing) projector light source. To be specific, the same release material in a liquid state as that used above was poured into the patterning tray of the patterning apparatus, and a first liquid layer (with a thickness of 5 mm) was formed. Next, the same patterning material as that used above was gently poured into the patterning tray, and a second liquid layer of the patterning material was formed on the first liquid layer.

The pattern forming surface of the platform of the patterning apparatus was immersed, facing downward, in the second liquid layer, and a liquid film was formed between the pattern forming surface and the first liquid layer. Light having a wavelength of 405 nm was irradiated toward the pattern forming surface in a circular shape with a diameter of 1 cm from the light source at a light intensity of 5 mW/cm2 from below the tray, and the liquid film on the pattern forming surface was cured. The platform was continuously lifted upward (Z axis direction) at a rate of 1 cm/min while light irradiation was continued under the above condition. At this time, the platform was continuously lifted without resistance, with the cured product being held on the pattern forming surface, and the cured film was removed from the first liquid layer without resistance. Also, the resulting cylindrical three-dimensional pattern was uniformly cured, and had a good outer appearance.

The formation of each of the two-dimensional pattern and the three-dimensional pattern was performed in the air under the condition that the liquid temperature was set to room temperature (25°C).

### (2-2) Evaluation B

In the same manner as described in (a) in the paragraph "Evaluation A", a second liquid layer of the patterning material was formed on the first liquid layer. Next, the first liquid layer and the second liquid layer were sufficiently agitated with a spatula, and thereafter the state of phase separation between the first liquid layer and the second liquid layer of the patterning material was visually checked and rated based on the following criteria.
Criterion A: The second liquid layer is formed on the first liquid layer. The first liquid layer and the second liquid layer are phase-separated into two layers, and a distinct interface is observed between the two layers.
Criterion B: A layer made of the release material is formed as the lower layer and a layer made of the patterning material is formed as the upper layer, but a distinct interface is not observed between the two layers.
Criterion C: The release material and the patterning material are phase-separated into two layers, but a layer made of the patterning material is formed as the lower layer (first liquid layer) and a layer made of the release material is formed as the upper layer (second liquid layer).
Criterion D: The release material and the patterning material are mixed with each other in a compatible manner, or formed into an emulsion.

Next, a two-dimensional pattern was formed in the same manner as described in (b) in the paragraph "Evaluation A". At this time, the state of the cured film (two-dimensional pattern) of the patterning material and the condition in removing the cured film were evaluated based on the following criteria.
Criterion A: A thin cured film was formed. The cured film was easily removed from the vicinity of the interface between the first liquid layer and the second liquid layer by using a pair of tweezers, and lifted from the first liquid layer without resistance.
Criterion B: The cured film was easily removed with a pair of tweezers, and lifted from the first liquid layer without resistance. However, the cured film had a deformed and indefinite shape.
Criterion C: A thin cured film was formed. However, the cured film was firmly attached to the inner bottom surface of the glass petri dish, and it was not possible to detach the cured film while maintaining the shape of the cured film.
Criterion D: A cured film was not formed, or only fine cured particles were dispersed in the liquid and were not removed as a cured film.

The formation of each two-dimensional pattern was performed in the air under the condition that the liquid temperature was set to room temperature (25°C).

### Example 2

Evaluations A and B were performed in the same manner as in Example 1, except that another release material in a liquid state having a perfluorocarbon structure (material b2, Demnum S-65 available from Daikin Industries, Ltd.) was used instead of the release material b1.

### Example 3

Evaluations A and B were performed in the same manner as in Example 1, except that another release material in a liquid state having a perfluorocarbon structure (material b3, C4F9OCH3, Novec® 7100 available from 3M Corporation®) was used instead of the release material b1.

### Example 4

Evaluations A and B were performed in the same manner as in Example 1, except that saturated salt water prepared at room temperature (material b4) was used instead of the release material b1.

### Comparative Example 1

Operations were performed in the same manner as in Example 1, except that Evaluations A and B were performed by using water (material b5) instead of the release material b1. Water was poured into the glass petri dish, and a first liquid layer in a liquid state was formed. After that, the patterning material was gently poured into the glass petri dish. As a result, a second liquid layer of the patterning material was formed as the lower layer, and the first liquid layer was formed on the second liquid layer. In this state, light irradiation was performed. As a result, the patterning material was cured and a cured film was formed on the inner bottom surface of the glass petri dish, but it was not possible to detach the cured film while maintaining the shape of the cured film.

### Comparative Example 2

Operations were performed in the same manner as in Example 1, except that Evaluations A and B were performed by using silicone oil (material b6, KF 96-1000cp available from Shin-Etsu Chemical Co., Ltd.) instead of the release material b1. The silicone oil was poured into the glass petri dish, and a first liquid layer in a liquid state was formed. After that, the patterning material was gently poured into the glass petri dish. As a result, a second liquid layer of the patterning material was formed as the lower layer, and the first liquid layer was formed on the second liquid layer. In this state, light irradiation was performed. As a result, the patterning material was cured and a cured film was formed on the inner bottom surface of the glass petri dish, but it was not possible to detach the cured film while maintaining the shape of the cured film.

### Example 5

A patterning material (material a2) was prepared in the same manner as in Example 1, except that, in (1) of Example 1, a diacrylate of adduct composed of bisphenol A and four ethylene oxide molecules added to the bisphenol A was used instead of tricyclodecane dimethanol diacrylate. Evaluations A and B were performed in the same manner as in Example 1, except that the patterning material a2 was used.

### Example 6

A patterning material (material a3) was prepared in the same manner as in Example 1, except that, in (1) of Example 1, dipentaerythritol hexaacrylate was used instead of tricyclodecane dimethanol diacrylate. Evaluations A and B were performed in the same manner as in Example 1, except that the patterning material a3 was used.

### Example 7

A patterning material (material a4) was prepared in the same manner as in Example 1, except that, in (1) of Example 1, dipentaerythritol pentaacrylate was used instead of tricyclodecane dimethanol diacrylate. Evaluations A and B were performed in the same manner as in Example 1, except that the patterning material a4 was used.

### Example 8

A patterning material (material a5) was prepared in the same manner as in Example 1, except that, in (1) of Example 1, 3,3,5-trimethylcyclohexanol acrylate was used instead of tricyclodecane dimethanol diacrylate. Evaluations A and B were performed in the same manner as in Example 1, except that the patterning material a5 was used.

### Comparative Example 3

Operations were performed in the same manner as in Example 8, except that Evaluations A and B were performed by using chloroform (material b7) as the release material.

### Example 9

A patterning material (material a6) was prepared in the same manner as in Example 1, except that, in (1) of Example 1, isobornyl acrylate was used instead of tricyclodecane dimethanol diacrylate. Evaluations A and B were performed in the same manner as in Example 1, except that the patterning material a6 was used.

### Example 10

A patterning material (material a7) was prepared in the same manner as in Example 1, except that, in (1) of Example 1, 2-phenoxyethyl acrylate was used instead of tricyclodecane dimethanol diacrylate. Evaluations A and B were performed in the same manner as in Example 1, except that the patterning material a7 was used.

### Example 11

A patterning material (material a8) was prepared in the same manner as in Example 1, except that, in (1) of Example 1, a polyether-series urethane acrylate oligomer (CN 986 available from Sartomer) was used instead of tricyclodecane dimethanol diacrylate. Evaluations A and B were performed in the same manner as in Example 1, except that the patterning material a8 was used.

### Example 12

In (1) of Example 1, 3',4'-epoxycyclohexylmethyl-3,4-epoxycyclohexane carboxylate was used instead of tricyclodecane dimethanol diacrylate. A cation-type photopolymerization initiator (Irgacure 270 available from BASF) was used instead of the acylphosphine oxide-series photopolymerization initiator. Furthermore, 0.2 parts by mass of dibutoxyanthracene was used as a light sensitizer. A patterning material (material a9) was prepared in the same manner as in Example 1 except for the above changes. Evaluations A and B were performed in the same manner as in Example 1, except that the patterning material a9 was used.

The results obtained in the examples and comparatives examples are shown in Table 1. Table 1 also shows, in addition to the physical properties (specific gravity, viscosity and surface tension) of the patterning material and the release material used, the difference (= d1 - d2) between the first specific gravity d1 and the second specific gravity d2, and the absolute value of the difference in surface tension between the release material and the patterning. Examples 1 to 12 correspond to A1 to A12, and Comparative Examples 1 to 3 correspond to B1 to B3.

**[Table 1]**

| | A1 | A2 | A3 | A4 | A5 | A6 | A7 | A8 | A9 | A10 | A11 | A12 | B1 | B2 | B3 |
|---|---|---|---|---|---|---|---|---|---|---|---|---|---|---|---|
| Patterning material | a1 | a1 | a1 | a1 | a2 | a3 | a4 | a5 | a6 | a7 | a8 | a9 | a1 | a1 | a5 |
| Second specific gravity d₂ | 1.11 | 1.11 | 1.11 | 1.11 | 1.14 | 1.19 | 1.19 | 0.93 | 0.99 | 1.10 | 1.03 | 1.17 | 1.11 | 1.11 | 0.93 |
| Viscosity (mPa·s) | 130.0 | 130.0 | 130.0 | 130.0 | 1.1×10³ | 7.1×10³ | 13.6×10³ | 6.0 | 9.0 | 12.0 | 109.0×10³ | 300.0 | 130.0 | 130.0 | 6.0 |
| Surface tension (mN/m) | 38.5 | 38.5 | 38.5 | 38.5 | 36.6 | 39.6 | 39.9 | 27.3 | 31.7 | 39.2 | 35.0 | 44.7 | 38.5 | 38.5 | 27.3 |
| Release material | b1 | b2 | b3 | b4 | b1 | b1 | b1 | b1 | b1 | b1 | b1 | b1 | b5 | b6 | b7 |
| First specific gravity d₁ | 1.88 | 1.87 | 1.52 | 1.22 | 1.88 | 1.88 | 1.88 | 1.88 | 1.88 | 1.88 | 1.88 | 1.88 | 1.00 | 0.97 | 1.48 |
| Viscosity (mPa·s) | 2.8 | 150.0 | 0.4 | 1.0 | 2.8 | 2.8 | 2.8 | 2.8 | 2.8 | 2.8 | 2.8 | 2.8 | 1.0 | 1.0×10³ | 0.6 |
| Surface tension (mN/m) | 16.0 | 18.0 | 15.0 | 83.0 | 16.0 | 16.0 | 16.0 | 16.0 | 16.0 | 16.0 | 16.0 | 16.0 | 73.0 | 20.0 | 27.2 |
| d₁ - d₂ | 0.77 | 0.77 | 0.41 | 0.11 | 0.74 | 0.69 | 0.69 | 0.95 | 0.89 | 0.78 | 0.85 | 0.71 | -0.11 | -0.14 | 0.55 |
| Difference in surface tension (mN/m) | 22.5 | 20.5 | 23.5 | 44.5 | 20.6 | 23.6 | 23.9 | 11.3 | 15.7 | 23.2 | 19.0 | 28.7 | 34.5 | 18.5 | 0.1 |
| Lower layer | b1 | b2 | b3 | b4 | b1 | b1 | b1 | b1 | b1 | b1 | b1 | b1 | a1 | a1 | b7 |
| Upper layer | a1 | a1 | a1 | a1 | a2 | a3 | a4 | a5 | a6 | a7 | a8 | a9 | b5 | b6 | a5 |
| Evaluation A | | | | | | | | | | | | | | | |
| State of phase separation | A | A | A | A | A | A | A | A | A | A | A | A | C | C | B |
| Cured state | A | A | A | A | A | A | A | A | A | A | A | A | C | C | B |
| Evaluation B | | | | | | | | | | | | | | | |
| State of phase separation | A | A | A | A | A | A | A | A | A | A | A | A | C | C | D |
| Cured state | A | A | A | A | A | A | A | A | A | A | A | A | C | C | D |

As shown in Table 1, in the examples, the first liquid layer (lower layer) of the release material and the second liquid layer (upper layer) of the patterning material had phase-separated with a distinct interface, and a clearly shaped thin cured film was formed. Also, the cured film was easily removed with a pair of tweezers. In contrast, in Comparative Examples 1 and 2, the first liquid layer of the release material was formed as the upper layer, and the second liquid layer of the patterning material was formed as the lower layer. Accordingly, the cured film was firmly attached to the inner bottom surface of the patterning tray, and it was difficult to remove the cured film in the form of a thin film. In Comparative Example 3, as a result of Evaluation A, it was not possible to observe an interface between the first liquid layer, which was the lower layer, and the second liquid layer, which was the upper layer, and the cured film had a deformed shape. Also, in Comparative Example 3, as a result of Evaluation B, it was found that the patterning material and the release material were completely mixed with each other in a compatible manner, and a cured film was not formed even after light irradiation was performed.

### [Industrial Applicability]

With the patterning method and the patterning apparatus according to the embodiment of the present invention, in suspension optical shaping, it is possible to form a photocured pattern easily and in a short time, without the need to detach the photocured pattern (cured product) from the release layer, and also possible to perform continuous patterning. Thus, the patterning method and the patterning apparatus according to the embodiment of the present invention are also suitable for high speed optical shaping.

### [Reference Signs List]

1: first liquid layer
2: second liquid layer
3: patterning tray
3a: light-exposed surface
4: platform
4a: pattern forming surface
5: light source
L: light
11a: liquid film
11b: pattern
101: release layer
102: patterning material
102a: liquid film
102b: pattern
103: tray
104: platform
104a: pattern forming surface
105: light source

## Claims

1. A patterning method for forming a pattern (11b) by irradiating light (L) toward a photocurable patterning material (102), the method comprising the steps of:
(i) supplying a release material in a liquid state having a first specific gravity d₁ and the patterning material (102) in a liquid state that has a second specific gravity d₂ smaller than the first specific gravity d₁ and phase-separates from the release material to a patterning tray (3) including a bottom portion having a light-exposed surface (3a) to form a first liquid layer (1) of the release material in contact with the bottom portion and also form, on the first liquid layer (1), a second liquid layer (2) of the patterning material (102) in contact with the first liquid layer (1), and thereby forming a liquid film (11a) made of the patterning material (102) in a vicinity of an interface of the second liquid layer (2) with the first liquid layer (1); and
(ii) irradiating light (L) to the liquid film (11a) via the first liquid layer (1) to photocure the liquid film (11a) and form a pattern (11b),
**characterised in that** the first specific gravity d1 is 1.2 or more,
a difference between the first specific gravity d1 and the second specific gravity d2 is 0.1 or more, and
the release material when forming the pattern (11b) in the step (ii) has a viscosity of 10 kg.m⁻¹.s⁻¹ or less, wherein the value of the viscosity is determined as specified in the description.

2. A patterning method for forming a pattern (11b) by irradiating light (L) toward a photocurable patterning material (102), the method comprising the steps of:
(i) supplying a release material in a liquid state having a first specific gravity d1 and the patterning material (102) in a liquid state that has a second specific gravity d2 smaller than the first specific gravity d1 and phase-separates from the release material to a patterning tray (3) including a bottom portion having a light-exposed surface (3a) to form a first liquid layer (1) of the release material in contact with the bottom portion and also form, on the first liquid layer (1), a second liquid layer (2) of the patterning material (102) in contact with the first liquid layer (1), and thereby forming a liquid film (11a) made of the patterning material (102) in a vicinity of an interface of the second liquid layer (2) with the first liquid layer (1); and
(ii) irradiating light (L) to the liquid film (11a) via the first liquid layer (1) to photocure the liquid film (11a) and form a pattern (11b), **characterised in that** a difference between a surface tension of the patterning material (102) and a surface tension of the release material is 10 mN/m or more, and
the release material when forming the pattern (11b) in the step (ii) has a viscosity of 10 kg.m⁻¹.s⁻¹ or less, wherein the value of the viscosity is determined as specified in the description.

3. The patterning method in accordance with claim 2,
wherein the first specific gravity d1 is 1.2 or more, and
a difference between the first specific gravity d1 and the second specific gravity d2 is 0.1 or more

4. The patterning method in accordance with any one of claims 1 to 3,
wherein the release material is a liquid that is inert to the patterning material (102) and the light (L), and
the liquid is a fluorine-containing liquid or a solution containing a salt.

5. The patterning method in accordance in accordance with any one of claims 1 to 4,
wherein, in the step (i), the liquid film (11a) is formed between a pattern forming surface (4a) of a platform (4) and the first liquid layer (1) by immersing the pattern forming surface (4a) in the second liquid layer (2).

6. The patterning method in accordance with claim 5, further comprising the steps of:
after the step (ii),
(iii) forming an additional liquid film (102a) made of the patterning material (102) between the pattern (11b) and the first liquid layer (1) by lifting the pattern forming surface (4a); and
(iv) irradiating light (L) to the additional liquid film (102a) via the first liquid layer (1) to photocure the additional liquid film (102a) and laminate an additional pattern (102b) on the pattern (11b).

7. The patterning method in accordance with claim 6,
wherein the step (iii) and the step (iv) are repeated a plurality of times.

8. A patterning apparatus for forming a pattern (11b) by irradiating light (L) toward a photocurable patterning material (102), the apparatus comprising:
a patterning tray (3) that includes a bottom portion having a light-exposed surface (3a), and in which a release material in a liquid state having a first specific gravity d1 and the patterning material (102) in a liquid state that has a second specific gravity d2 smaller than the first specific gravity d1 and phase-separates from the release material are supplied to form a first liquid layer (1) of the release material in contact with the bottom portion and also form, on the first liquid layer (1), a second liquid layer (2) of the patterning material (102) in contact with the first liquid layer (1) so that a liquid film (11a) made of the patterning material (102) is formed in a vicinity of an interface of the second liquid layer (2) with the first liquid layer (1); and
a light source (5) for emitting light (L) to the liquid film (11a) via the first liquid layer (1) to photocure the liquid film (11a) and form a pattern (11b),
**characterised in that** the first specific gravity d1 is 1.2 or more,
a difference between the first specific gravity d1 and the second specific gravity d2 is 0.1 or more, and
the release material when forming the pattern (11b) in the step (ii) has a viscosity of 10 kg.m⁻¹.s⁻¹ or less, wherein the value of the viscosity is determined as specified in the description.

9. A patterning apparatus for forming a pattern (11b) by irradiating light (L) toward a photocurable patterning material (102), the apparatus comprising:
a patterning tray (3) that includes a bottom portion having a light-exposed surface (3a), and in which a release material in a liquid state having a first specific gravity d1 and the patterning material (102) in a liquid state that has a second specific gravity d2 smaller than the first specific gravity d1 and phase-separates from the release material are supplied to form a first liquid layer (1) of the release material in contact with the bottom portion and also form, on the first liquid layer (1), a second liquid layer (2) of the patterning material (102) in contact with the first liquid layer (1) so that a liquid film (11a) made of the patterning material (102) is formed in a vicinity of an interface of the second liquid layer (2) with the first liquid layer (1); and
a light source (5) for emitting light (L) to the liquid film (11a) via the first liquid layer (1) to photocure the liquid film (11a) and form a pattern (11b),
**characterised in that** a difference between a surface tension of the patterning material (102) and a surface tension of the release material is 10 mN/m or more, and
the release material when forming the pattern (11b) in the step (ii) has a viscosity of 10 kg.m⁻¹.s⁻¹ or less, wherein the value of the viscosity is determined as specified in the description.

10. The patterning apparatus in accordance with claim 9,
wherein the first specific gravity d1 is 1.2 or more, and
a difference between the first specific gravity d1 and the second specific gravity d2 is 0.1 or more

11. The patterning apparatus in accordance with any one of claims 8 to 10, further comprising:
a platform (4) that includes a pattern forming surface (4a) and is movable in up and down directions to immerse the pattern forming surface (4a) in the second liquid layer (2) and form the liquid film (11a) between the pattern forming surface (4a) and the first liquid layer (1).

## Patentansprüche

1. Musterbildungsverfahren zum Ausbilden eines Musters (11b) durch Strahlen von Licht (L) in Richtung eines photochemisch härtbaren Musterbildungsmaterials (102), wobei das Verfahren die folgenden Schritte umfasst:
(i) Zuführen eines Trennmaterials in einem flüssigen Zustand, das ein erstes spezifisches Gewicht d1 aufweist, und des Musterbildungsmaterials (102) in einem flüssigen Zustand, das ein zweites spezifisches Gewicht d2 kleiner als das erste spezifische Gewicht d1 aufweist und sich von dem Trennmaterial phasensepariert, zu einer Musterbildungsschale (3), die einen Bodenabschnitt beinhaltet, der eine belichtete Oberfläche (3a) aufweist, um eine erste Flüssigkeitsschicht (1) des Trennmaterials in Berührung mit dem Bodenabschnitt auszubilden und ebenso, auf der ersten Flüssigkeitsschicht (1), eine zweite Flüssigkeitsschicht (2) des Musterbildungsmaterials (102) in Berührung mit der ersten Flüssigkeitsschicht (1) auszubilden, und wobei dadurch ein Flüssigkeitsfilm (11a) aus dem Musterbildungsmaterial (102) in einer Nähe einer Grenzoberfläche der zweiten Flüssigkeitsschicht (2) mit der ersten Flüssigkeitsschicht (1) ausgebildet wird; und
(ii) Strahlen von Licht (L) auf den Flüssigkeitsfilm (11a) über die erste Flüssigkeitsschicht (1), um den Flüssigkeitsfilm (11a) photochemisch zu härten und ein Muster (11b) auszubilden,
**dadurch gekennzeichnet, dass** das erste spezifische Gewicht d1 wenigstens 1,2 beträgt,
eine Differenz zwischen dem ersten spezifischen Gewicht d1 und dem zweiten spezifischen Gewicht d2 wenigstens 0,1 beträgt und
das Trennmaterial während des Ausbildens des Musters (11b) in dem Schritt (ii) eine Viskosität von höchstens 10 kg.m⁻¹.s⁻¹ aufweist, wobei der Wert der Viskosität wie in der Beschreibung spezifiziert bestimmt wird.

2. Musterbildungsverfahren zum Ausbilden eines Musters (11b) durch Strahlen von Licht (L) in Richtung eines photochemisch härtbaren Musterbildungsmaterials (102), wobei das Verfahren die folgenden Schritte umfasst:
(i) Zuführen eines Trennmaterials in einem flüssigen Zustand, das ein erstes spezifisches Gewicht d1 aufweist, und des Musterbildungsmaterials (102) in einem flüssigen Zustand, das ein zweites spezifisches Gewicht d2 kleiner als das erste spezifische Gewicht d1 aufweist und sich von dem Trennmaterial phasensepariert, zu einer Musterbildungsschale (3), die einen Bodenabschnitt beinhaltet, der eine belichtete Oberfläche (3a) aufweist, um eine erste Flüssigkeitsschicht (1) des Trennmaterials in Berührung mit dem Bodenabschnitt auszubilden und ebenso, auf der ersten Flüssigkeitsschicht (1), eine zweite Flüssigkeitsschicht (2) des Musterbildungsmaterials (102) in Berührung mit der ersten Flüssigkeitsschicht (1) auszubilden, und wobei dadurch ein Flüssigkeitsfilm (11a) aus dem Musterbildungsmaterial (102) in einer Nähe einer Grenzoberfläche der zweiten Flüssigkeitsschicht (2) mit der ersten Flüssigkeitsschicht (1) ausgebildet wird; und
(ii) Strahlen von Licht (L) auf den Flüssigkeitsfilm (11a) über die erste Flüssigkeitsschicht (1), um den Flüssigkeitsfilm (11a) photochemisch zu härten und ein Muster (11b) auszubilden, **dadurch gekennzeichnet, dass** eine Differenz zwischen einer Oberflächenspannung des Musterausbildungsmaterials (102) und einer Oberflächenspannung des Trennmaterials wenigstens 10 mN/m beträgt und
das Trennmaterial während des Ausbildens des Musters (11b) in dem Schritt (ii) eine Viskosität von höchstens 10 kg.m⁻¹.s⁻¹ aufweist, wobei der Wert der Viskosität wie in der Beschreibung spezifiziert bestimmt wird.

3. Musterbildungsverfahren nach Anspruch 2,
wobei das erste spezifische Gewicht d1 wenigstens 1,2 beträgt und
eine Differenz zwischen dem ersten spezifischen Gewicht d1 und dem zweiten spezifischen Gewicht d2 wenigstens 0,1 beträgt.

4. Musterbildungsverfahren nach einem der Ansprüche 1 bis 3,
wobei das Trennmaterial eine Flüssigkeit ist, die gegenüber dem Musterbildungsmaterial (102) und dem Licht (L) inert ist, und
die Flüssigkeit eine fluorhaltige Flüssigkeit oder eine Lösung ist, die ein Salz enthält.

5. Musterbildungsverfahren nach einem der Ansprüche 1 bis 4,
wobei, in dem Schritt (i), der Flüssigkeitsfilm (11a) zwischen einer musterausbildenden Oberfläche (4a) einer Plattform (4) und der ersten Flüssigkeitsschicht (1) durch Eintauchen der musterausbildenden Oberfläche (4a) in die zweite Flüssigkeitsschicht (2) ausgebildet wird.

6. Musterbildungsverfahren nach Anspruch 5, das ferner die Folgenden Schritte umfasst:
nach dem Schritt (ii),
(iii) Ausbilden eines zusätzlichen Flüssigkeitsfilms (102a) aus dem Musterbildungsmaterial (102) zwischen dem Muster (11b) und der ersten Flüssigkeitsschicht (1) durch Anheben der musterausbildenden Oberfläche (4a); und
(iv) Strahlen von Licht (L) auf den zusätzlichen Flüssigkeitsfilm (102a) über die erste Flüssigkeitsschicht (1), um den zusätzlichen Flüssigkeitsfilm (102a) photochemisch zu härten und ein zusätzliches Muster (102b) auf das Muster (11b) zu schichten.

7. Musterbildungsverfahren nach Anspruch 6,
wobei der Schritt (iii) und der Schritt (iv) mehrere Male wiederholt werden.

8. Musterbildungsvorrichtung zum Ausbilden eines Musters (11b) durch Strahlen von Licht (L) in Richtung eines photochemisch härtbaren Musterbildungsmaterials (102), wobei die Vorrichtung Folgendes umfasst:
eine Musterbildungsschale (3), die einen Bodenabschnitt beinhaltet, der eine belichtete Oberfläche (3a) aufweist, und wobei ein Trennmaterial in einem flüssigen Zustand, das ein erstes spezifisches Gewicht d1 aufweist, und das Musterbildungsmaterial (102) in einem flüssigen Zustand, das ein zweites spezifisches Gewicht d2 kleiner als das erste spezifische Gewicht d1 aufweist und sich von dem Trennmaterial phasensepariert, zugeführt werden, um eine erste Flüssigkeitsschicht (1) des Trennmaterials in Berührung mit dem Bodenabschnitt auszubilden und ebenso, auf der ersten Flüssigkeitsschicht (1), eine zweite Flüssigkeitsschicht (2) des Musterbildungsmaterials (102) in Berührung mit der ersten Flüssigkeitsschicht (1) auszubilden, so dass ein Flüssigkeitsfilm (11a) aus dem Musterbildungsmaterial (102) in einer Nähe einer Grenzoberfläche der zweiten Flüssigkeitsschicht (2) mit der ersten Flüssigkeitsschicht (1) ausgebildet wird; und
eine Lichtquelle (5) zum Aussenden von Licht (L) zu dem Flüssigkeitsfilm (11a) über die erste Flüssigkeitsschicht (1), um den Flüssigkeitsfilm (11a) photochemisch zu härten und ein Muster (11b) auszubilden,
**dadurch gekennzeichnet, dass** das erste spezifische Gewicht d1 wenigstens 1,2 beträgt,
eine Differenz zwischen dem ersten spezifischen Gewicht d1 und dem zweiten spezifischen Gewicht d2 wenigstens 0,1 beträgt und
das Trennmaterial während des Ausbildens des Musters (11b) in dem Schritt (ii) eine Viskosität von höchstens 10 kg.m⁻¹.s⁻¹ aufweist, wobei der Wert der Viskosität wie in der Beschreibung spezifiziert bestimmt wird.

9. Musterbildungsvorrichtung zum Ausbilden eines Musters (11b) durch Strahlen von Licht (L) in Richtung eines photochemisch härtbaren Musterbildungsmaterials (102), wobei die Vorrichtung Folgendes umfasst:
eine Musterbildungsschale (3), die einen Bodenabschnitt beinhaltet, der eine belichtete Oberfläche (3a) aufweist, und wobei ein Trennmaterial in einem flüssigen Zustand, das ein erstes spezifisches Gewicht d1 aufweist, und das Musterbildungsmaterial (102) in einem flüssigen Zustand, das ein zweites spezifisches Gewicht d2 kleiner als das erste spezifische Gewicht d1 aufweist und sich von dem Trennmaterial phasensepariert, zugeführt werden, um eine erste Flüssigkeitsschicht (1) des Trennmaterials in Berührung mit dem Bodenabschnitt auszubilden und ebenso, auf der ersten Flüssigkeitsschicht (1), eine zweite Flüssigkeitsschicht (2) des Musterbildungsmaterials (102) in Berührung mit der ersten Flüssigkeitsschicht (1) auszubilden, so dass ein Flüssigkeitsfilm (11a) aus dem Musterbildungsmaterial (102) in einer Nähe einer Grenzoberfläche der zweiten Flüssigkeitsschicht (2) mit der ersten Flüssigkeitsschicht (1) ausgebildet wird; und
eine Lichtquelle (5) zum Aussenden von Licht (L) zu dem Flüssigkeitsfilm (11a) über die erste Flüssigkeitsschicht (1), um den Flüssigkeitsfilm (11a) photochemisch zu härten und ein Muster (11b) auszubilden,
**dadurch gekennzeichnet, dass** eine Differenz zwischen einer Oberflächenspannung des Musterausbildungsmaterials (102) und einer Oberflächenspannung des Trennmaterials wenigstens 10 mN/m beträgt und
das Trennmaterial während des Ausbildens des Musters (11b) in dem Schritt (ii) eine Viskosität von höchstens 10 kg.m⁻¹.s⁻¹ aufweist, wobei der Wert der Viskosität wie in der Beschreibung spezifiziert bestimmt wird.

10. Musterbildungsvorrichtung nach Anspruch 9,
wobei das erste spezifische Gewicht d1 wenigstens 1,2 beträgt und
eine Differenz zwischen dem ersten spezifischen Gewicht d1 und dem zweiten spezifischen Gewicht d2 wenigstens 0,1 beträgt.

11. Musterbildungsvorrichtung nach einem der Ansprüche 8 bis 10, die ferner Folgendes umfasst:
eine Plattform (4), die eine musterausbildende Oberfläche (4a) beinhaltet und in Aufwärts- und Abwärtsrichtung bewegbar ist, um die musterausbildende Oberfläche (4a) in die zweite Flüssigkeitsschicht (2) einzutauchen und den Flüssigkeitsfilm (11a) zwischen der musterausbildenden Oberfläche (4a) und der ersten Flüssigkeitsschicht (1) auszubilden.

## Revendications

1. Procédé de formation de motif destiné à former un motif (11b) en faisant rayonner de la lumière (L) vers un matériau de formation de motif (102) photodurcissable, le procédé comprenant les étapes consistant à :
(i) fournir un matériau de décollement à l'état liquide ayant une première densité spécifique d1 et le matériau de formation de motif (102) à l'état liquide qui a une seconde densité spécifique d2 inférieure à la première densité spécifique d1 et se sépare en phase du matériau de décollement en un plateau à motif (3) comportant une partie inférieure ayant une surface exposée à la lumière (3a) pour former une première couche liquide (1) du matériau de décollement en contact avec la partie inférieure et également former, sur la première couche liquide (1), une seconde couche liquide (2) du matériau de formation de motif (102) en contact avec la première couche liquide (1), et formant ainsi une pellicule liquide (11a) faite du matériau de formation de motif (102) à proximité d'une interface de la seconde couche liquide (2) avec la première couche liquide (1) ; et
(ii) faire rayonner de la lumière (L) sur la pellicule liquide (11a) par l'intermédiaire de la première couche liquide (1) pour photodurcir la pellicule liquide (11a) et former un motif (11b),
**caractérisé en ce que** la première densité spécifique d1 est égale ou supérieure à 1,2,
une différence entre la première densité spécifique d1 et la seconde densité spécifique d2 est égale ou supérieure à 0,1, et
le matériau de décollement lors de la formation du motif (11b) à l'étape (ii) a une viscosité inférieure ou égale à 10 kg.m⁻¹.s⁻¹, la valeur de la viscosité étant déterminée comme indiqué dans la description.

2. Procédé de formation de motif destiné à former un motif (11b) en faisant rayonner de la lumière (L) vers un matériau de formation de motif (102) photodurcissable, le procédé comprenant les étapes consistant à :
(i) fournir un matériau de décollement à l'état liquide ayant une première densité spécifique d1 et le matériau de formation de motif (102) à l'état liquide qui a une seconde densité spécifique d2 inférieure à la première densité spécifique d1 et se sépare en phase du matériau de décollement en un plateau de formation de motif (3) comportant une partie inférieure ayant une surface exposée à la lumière (3a) pour former une première couche liquide (1) du matériau de décollement en contact avec la partie inférieure et également former, sur la première couche liquide (1), une seconde couche liquide (2) du matériau de formation de motif (102) en contact avec la première couche liquide (1), et formant ainsi une pellicule liquide (11a) faite du matériau de formation de motif (102) à proximité d'une interface de la seconde couche liquide (2) avec la première couche liquide (1) ; et
(ii) faire rayonner de la lumière (L) vers la pellicule liquide (11a) par l'intermédiaire de la première couche liquide (1) pour photodurcir la pellicule liquide (11a) et former un motif (11b), **caractérisé en ce qu'**une différence entre une tension de surface du matériau de formation de motif (102) et une tension de surface du matériau de décollement est égale ou supérieure à 10 mN/m, et
le matériau de décollement lors de la formation du motif (11b) dans l'étape (ii) a une viscosité inférieure ou égale à 10 kg.m⁻¹.s⁻¹, la valeur de la viscosité étant déterminée comme spécifié dans la description.

3. Procédé de formation de motif selon la revendication 2,
la première densité spécifique d1 étant égale ou supérieure à 1,2, et
une différence entre la première densité spécifique d1 et la seconde densité spécifique d2 étant égale ou supérieure à 0,1

4. Procédé de formation de motif selon l'une quelconque des revendications 1 à 3,
le matériau de décollement étant un liquide qui est inerte vis-à-vis du matériau de formation de motif (102) et de la lumière (L), et
le liquide étant un liquide contenant du fluor ou une solution contenant un sel.

5. Procédé de formation de motif selon l'une quelconque des revendications 1 à 4,
à l'étape (i), la pellicule liquide (11a) étant formée entre une surface de formation de motif (4a) d'une plateforme (4) et la première couche liquide (1) par immersion de la surface de formation de motif (4a) dans la seconde couche liquide (2).

6. Procédé de formation de motif selon la revendication 5, comprenant en outre les étapes consistant à :
après l'étape (ii),
(iii) former une pellicule liquide supplémentaire (102a) faite du matériau de formation de motif (102) entre le motif (11b) et la première couche liquide (1) en soulevant la surface de formation de motif (4a) ; et
(iv) faire rayonner de la lumière (L) vers la pellicule liquide supplémentaire (102a) par l'intermédiaire de la première couche liquide (1) pour photodurcir la pellicule liquide supplémentaire (102a) et laminer un motif supplémentaire (102b) sur le motif (11b).

7. Procédé de formation de motif selon la revendication 6,
l'étape (iii) et l'étape (iv) étant répétées une pluralité de fois.

8. Appareil de formation de motif destiné à former un motif (11b) en faisant rayonner de la lumière (L) vers un matériau de formation de motif (102) photodurcissable, l'appareil comprenant :
un plateau de formation de motif (3) qui comporte une partie inférieure ayant une surface exposée à la lumière (3a), et dans lequel un matériau de décollement à l'état liquide ayant une première densité spécifique d1 et le matériau de formation de motif (102) à l'état liquide qui a une seconde densité spécifique d2 inférieure à la première densité spécifique d1 et se sépare en phase du matériau de décollement sont fournis pour former une première couche liquide (1) du matériau de décollement en contact avec la partie inférieure et également former, sur la première couche liquide (1), une seconde couche liquide (2) du matériau de formation de motif (102) en contact avec la première couche de liquide (1) de sorte qu'une pellicule liquide (11a) faite du matériau de formation de motif (102) est formée à proximité d'une interface de la seconde couche liquide (2) avec la première couche liquide (1) ; et
une source de lumière (5) destinée à émettre de la lumière (L) vers la pellicule liquide (11a) par l'intermédiaire de la première couche liquide (1) pour photodurcir la pellicule liquide (11a) et former un motif (11b),
**caractérisé en ce que** la première densité spécifique d1 est égale ou supérieure à 1,2,
une différence entre la première densité spécifique d1 et la seconde densité spécifique d2 étant égale ou supérieure à 0,1, et
le matériau de décollement lors de la formation du motif (11b) à l'étape (ii) a une viscosité inférieure ou égale à 10 kg.m⁻¹.s⁻¹, la valeur de la viscosité étant déterminée comme indiqué dans la description.

9. Appareil de formation de motif destiné à former un motif (11b) en faisant rayonner de la lumière (L) vers un matériau de formation de motif (102) photodurcissable, l'appareil comprenant :
un plateau de formation de motif (3) qui comporte une partie inférieure ayant une surface exposée à la lumière (3a), et dans lequel un matériau de décollement à l'état liquide ayant une première densité spécifique d1 et le matériau de formation de motif (102) à l'état liquide qui a une seconde densité spécifique d2 inférieure à la première densité spécifique d1 et se sépare en phase du matériau de décollement sont fournis pour former une première couche liquide (1) du matériau de décollement en contact avec la partie inférieure et également former, sur la première couche liquide (1), une seconde couche liquide (2) du matériau de formation de motif (102) en contact avec la première couche de liquide (1) de sorte qu'une pellicule liquide (11a) faite du matériau de formation de motif (102) est formée à proximité d'une interface de la seconde couche liquide (2) avec la première couche liquide (1) ; et
une source de lumière (5) destinée à émettre de la lumière (L) vers la pellicule liquide (11a) par l'intermédiaire de la première couche liquide (1) pour photodurcir la pellicule liquide (11a) et former un motif (11b),
**caractérisé en ce que** la différence entre une tension de surface du matériau de formation de motif (102) et une tension de surface du matériau de décollement est égale ou supérieure à 10 mN/m, et
le matériau de décollement lors de la formation du motif (11b) à l'étape (ii) a une viscosité inférieure ou égale à 10 kg.m⁻¹.s⁻¹, la valeur de la viscosité étant déterminée comme indiqué dans la description.

10. Appareil de formation de motif selon la revendication 9,
la première densité spécifique d1 étant égale ou supérieure à 1,2, et
une différence entre la première densité spécifique d1 et la seconde densité spécifique d2 étant égale ou supérieure à 0,1

11. Appareil de formation de motif selon l'une quelconque des revendications 8 à 10, comprenant en outre :
une plateforme (4) qui comporte une surface de formation de motif (4a) et qui est mobile dans des directions de haut en bas pour immerger la surface de formation de motif (4a) dans la seconde couche liquide (2) et former la pellicule liquide (11a) entre la surface de formation de motif (4a) et la première couche liquide (1).
